# EUROPÄISCHE PATENTSCHRIFT

(11) **EP 2 496 461 B1**
(45) Veröffentlichungstag und Bekanntmachung des Hinweises auf die Patenterteilung: **07.01.2015**
(21) Anmeldenummer: 10771426.3
(22) Anmeldetag: 25.10.2010
(51) Int. Cl.: B62D 5/04

(54) **VERFAHREN ZUM BETREIBEN EINER HILFSKRAFTLENKUNG**
METHOD FOR OPERATING A POWER STEERING
PROCÉDÉ DE FONCTIONNEMENT D'UNE DIRECTION ASSISTÉE

(30) Priorität: 04.11.2009 DE 102009046379; 12.03.2010 DE 102010002803
(43) Veröffentlichungstag der Anmeldung: 12.09.2012
(73) Patentinhaber: ZF-Lenksysteme GmbH, 73527 Schwäbisch Gmünd (DE)
(72) Erfinder: HEILIG, Arnulf, 73529 Schwäbisch Gmünd (DE); RETTENMEIER, Claudio, 73479 Ellwangen (DE)
(86) Internationale Anmeldenummer: PCT/EP2010/066053
(87) Internationale Veröffentlichungsnummer: WO 2011/054692

(56) Entgegenhaltungen:
- EP-A1- 1 886 900
- WO-A1-2008/116555

## Beschreibung

Die Erfindung betrifft ein Verfahren zum Betreiben einer Hilfskraftlenkung.

Hilfskraftlenkungen sind bekannt und sehen vor, dass einem von einem Fahrer aufgebrachten Handmoment mittels eines Motors ein Motormoment überlagert wird. Da die Hilfskraftlenkung üblicherweise im Freien eingesetzt wird, ist diese äußeren Einflüssen, insbesondere Umwelt- und Temperatureinflüssen, ausgesetzt. Hierdurch kann die Funktionsfähigkeit der Lenkung beeinträchtigt werden. Dabei stellt insbesondere ein Einfrieren der Hilfskraftlenkung durch eingedrungenes Wasser ein besonderes Problem dar.

Es ist bekannt, ein Wasserablassventil in einem Lenkungsgehäuse anzuordnen, insbesondere bei einer achsparallelen Anordnung, das sich bei Wassereintritt öffnet und dafür sorgt, dass in das Lenkgetriebe eingedrungenes Wasser wieder ablaufen und somit die Lenkung bei Tieftemperaturen nicht einfrieren kann.

Aus der Druckschrift WO 2008/116555 A1, die den Oberbegriff des Anspruchs 1 bildet, sind ein elektromechanisches System und ein Verfahren zur Erkennung eines beginnenden Einfrierens eines elektromechanischen Systems sowie ein Kraftfahrzeug mit einem elektromechanischen System bekannt. Das elektromechanische System umfasst einen Elektromotor, mindestens ein mechanisches Element, das von dem Elektromotor bewegt wird, und ein Steuergerät. Dem Steuergerät wird mindestens eine Eingangsgröße zugeführt, wobei das Steuergerät aus der Eingangsgröße eine Sollgröße für den Elektromotor ermittelt. Es ist vorgesehen, dass eine Stellgröße des mechanischen Elements erfasst und dem Steuergerät übermittelt wird, wobei aus dem Vergleich von Sollgröße für den Elektromotor und Stellgröße des mechanischen Systems ein Stick-Slip-Effekt erfasst wird. Weiterhin werden als geeignete Mittel zur Erkennung der Gefahr des Verdickens oder des Einfrierens einer Betriebsflüssigkeit oder einer in das elektromechanische System eingedrungenen Flüssigkeit ein Temperatursensor, ein Feuchtesensor und ein sogenannter Stick-Slip-Erkenner beschrieben. Ein Stick-Slip-Erkenner kann bspw. ein Mittel zur Aufnahme von Geräuschen bzw. von Körperschall sein.

Es stellt sich die Aufgabe, ein Verfahren zum Betreiben einer Hilfskraftlenkung vorzuschlagen, mit dem eine Beeinträchtigung der Hilfskraftlenkung auf einfache Weise erkannt werden kann. Hierbei ist insbesondere angestrebt, eine Beeinträchtigung möglichst frühzeitig bzw. bereits bei Beginn einer Beeinträchtigung zu erkennen.

Diese Aufgabe wird durch ein Verfahren nach Anspruch 1 gelöst.

Das beschriebene Verfahren zum Betreiben einer Hilfskraftlenkung sieht vor, dass einem von einem Fahrer vorgegebenen Handmoment in einer Überlagerungseinheit ein von einem Motor aufgebrachtes Motormoment überlagert wird. Dabei wird eine Beeinträchtigung der Hilfskraftlenkung durch Auswertung von Drehzahlmustern des Motors erkannt.

Das vorgestellte Verfahren ist insbesondere dazu geeignet, ein Einfrieren der Hilfskraftlenkung, in der Lenkung bzw. dem Lenkgestänge, zu erkennen.

Es ist zweckmäßig, wenn ein erkannter Reibwert berücksichtigt wird.

Zusätzlich können weitere Randbedingungen, wie eine Rotordrehzahl, ein Handmoment, ein nominelles Motormoment, ein Lenkwinkel, eine Fahrzeuggeschwindigkeit, eine Endstufentemperatur (ECU), eine Außentemperatur und/oder ein Getriebevorzeichen-Indikator herangezogen werden.

In Ausgestaltung werden die Wirkrichtung des Handmoments und die Wirkrichtung des Motormoments berücksichtigt. Dabei wird darauf geachtet, ob das Handmoment und das Motormoment, die das Wirkmoment ergeben, in die gleiche Richtung wirken. Dies fördert die Robustheit des Verfahrens, da so überprüft werden kann, ob das erkannte Drehzahlmuster auf eine Betätigung des Fahrers zurückgeht und nicht durch äußere Störungen verursacht ist.

Es bietet sich an, dass bei Erkennen einer Beeinträchtigung Gegenmaßnahmen eingeleitet werden. Ein Beispiel hierfür ist eine Beaufschlagung eines oszillierenden Motormoments. Weiterhin kann ein Warnsignal (optisch und/oder akustisch) ausgegeben werden.

Es wird somit ein Verfahren beschrieben, das in Ausgestaltung auf Grundlage von Drehzahlmustern und erkannter Reibung ein Einfrieren der Lenkung erkennt. Um einen gefährlichen Zustand zu verhindern, kann ein oszillierendes Motormoment beaufschlagt werden, das dazu führt, dass die einfrierende Lenkung besser beherrschbar ist und nicht vollständig einfriert.

Dabei kann die Gefahr des Verdickens oder des Einfrierens einer Betriebsflüssigkeit oder einer in die Hilfskraftlenkung eingedrungenen Flüssigkeit erkannt werden.

Das beschriebene Verfahren kann in einem Mikroprozessor bzw. einer Recheneinheit eines Steuergeräts zur Ausführung kommen. In diesem Fall ist das Verfahren in einer Software bzw. einem computerimplementierten Algorithmus, der automatisiert zur Ausführung kommt und technische Größen erfasst und verarbeitet, verwirklicht.

Die Eingangsgrößen des Algorithmus können Rotordrehzahl, absolute Rotordrehzahl, Handmoment, nominelles Motormoment, absoluter Lenkwinkel, typischerweise gefilterte Fahrzeuggeschwindigkeit, Endstufentemperatur der ECU, Getriebevorzeichen und erkannter Reibwert sein.

Beginnt die Lenkung während der Fahrt einzufrieren, so treten spezifische Drehzahlmuster auf, die von der eingesetzten Software im Steuergerät erkannt werden können. Ist die Lenkung nicht eingefroren, so bewirkt das Lenken des Fahrers einen nahezu kontinuierlichen Verlauf der Rotordrehzahl.

Beginnt gemäß einem typischen Szenario die Lenkung einzufrieren, so ist die Drehzahl für etwa 100 ms sehr klein (< 5 U/min), dann wird die Lenkung durch den Fahrer wieder "freigelenkt", was einen kurzzeitigen Drehzahlsprung zur Folge hat. Anschließend friert die Lenkung wieder leicht fest, was wieder für kurze Zeit eine sehr kleine Drehzahl ergibt. Tritt dieses Drehzahlmuster mehrmals hintereinander, bspw. 10-mal, auf und sind andere Randbedingungen erfüllt, wie bspw. Temperatur < +5° C, Systemreibung > 0,2 Nm usw., so wird ein Einfrieren der Lenkung erkannt.

Nach dem Erkennen kann ein oszillierendes Motormoment beaufschlagt werden, das ein weiteres Einfrieren verhindert und dadurch die Beherrschbarkeit des Fahrzeugs deutlich verbessert, da die Stick-Slip-Effekte beim Einfrieren nicht mehr auftreten. Das oszillierende Moment dient gleichzeitig als haptische Rückmeldung an und für den Fahrer, um diesen zu warnen.

Auf diese Weise ist es möglich, dass die einfrierende Lenkung durch den Fahrer besser beherrschbar ist und nicht vollständig einfriert.

Nach erkanntem Einfrieren kann bspw. eine Fehlerlampe und/oder ein akustisches Signal aktiviert werden.

In einer konkreten Ausführung ist vorgesehen, dass als Eingangsgrößen des computerimplementierten Verfahrens eine Rotordrehzahl und/oder ein Handmoment und/oder ein nominelles Motormoment und/oder ein Lenkwinkel und/oder eine Fahrzeuggeschwindigkeit und/oder eine Endstufentemperatur (ECU) und/oder eine Außentemperatur und/oder eine Leiterplattentemperatur und/oder ein Getriebevorzeichen-Indikator und/oder ein ermittelter Reibwert vorgesehen sind.

Das vorgestellte Computerprogramm umfasst Programmcodemittel, um alle Schritte eines Verfahrens, wie dies voranstehend beschrieben ist, durchzuführen, wenn das Computerprogramm auf einem Computer oder einer entsprechenden Recheneinheit ausgeführt wird.

Das Computerprogrammprodukt umfasst diese Programmcodemittel, die auf einem computerlesbaren Datenträger gespeichert sind.

Dieses Computerprogramm kann auf einem computerlesbaren Datenträger, wie bspw. einer Diskette, CD, DVD, Festplatte, einem USB Memory Stick oder ähnlichem, oder einem Internetserver als Computerprogrammprodukt gespeichert sein. Von dort kann das Computerprogramm in ein Speicherelement des Steuergeräts übertragen werden.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.
- Figur 1: zeigt in schematischer Darstellung eine Ausführungsform der vorgestellten Hilfskraftlenkung.
- Figur 2: zeigt einen Drehzahlverlauf mit Sprüngen.
- Figur 3: zeigt einen Sprung in einen Drehzahlverlauf.

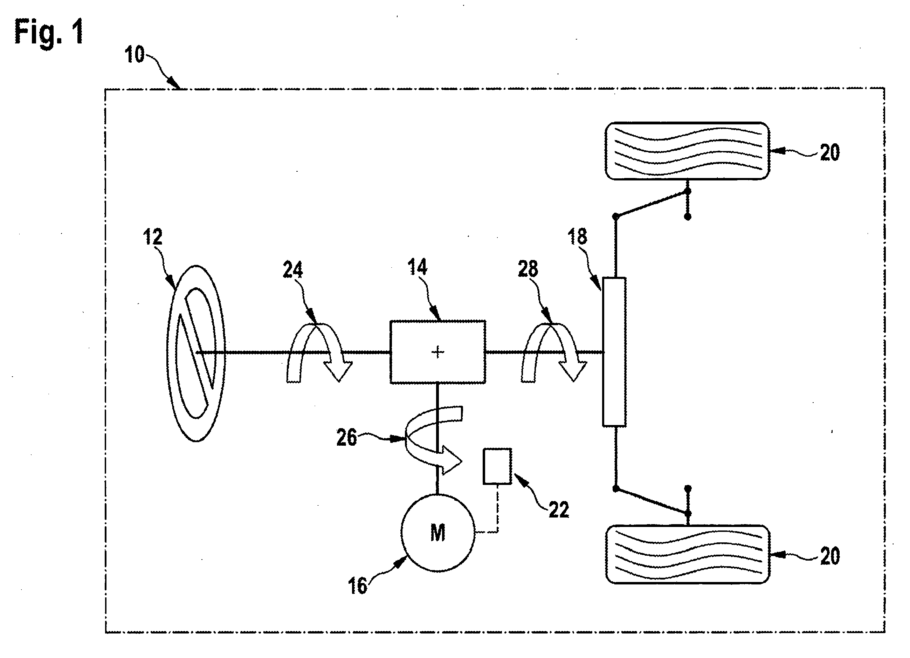

In Figur 1 ist eine Hilfskraftlenkung dargestellt, die insgesamt mit der Bezugsziffer 10 bezeichnet ist.

Die Darstellung zeigte eine Lenkhandhabe 12, die als Lenkrad ausgebildet ist, eine Überlagerungseinheit 14, der ein Motor 16 zur Momentenüberlagerung zugeordnet ist, eine Zahnstange 18, zwei angelenkte Räder 20, ein dem Motor 16 zugeordnetes Steuergerät 22

Von der Lenkhandhabe 12 wird eine Handmoment 24 vorgegeben. Diesem Handmoment 24 wird in der Überlagerungseinheit 14 ein Motormoment 26 überlagert, dass von dem Motor 16 aufgebracht wird. Hieraus ergibt sich ein Wirkmoment 28, das an der Zahnstange 18 anliegt und mit dem die Räder 20 angelenkt werden.

Das Steuergerät 22 ist neben der Ansteuerung des Motors 16 dazu ausgebildet, Drehzahlmuster, d. h. einen spezifischen Verlauf der Drehzahl, dieses Motors 16 zu erfassen. Diese Drehzahlmuster werden ausgewertet und auf diese Weise erkannt, ob eine Beeinträchtigung, bspw. ein Einfrieren, der Hilfskraftlenkung 10 vorliegt. Wird eine Beeinträchtigung erkannt, so werden Gegenmaßnahmen, bspw. eine oszillierende Beaufschlagung der Hilfskraftlenkung 10 durch den Motor 16, eingeleitet. Zusätzlich wird der Fahrer gewarnt.

Bei der Auswertung können verschiedene weitere Randwerte bzw.-bedingungen, wie bspw. ein Reibwert, berücksichtigt werden. Insbesondere wird auch überprüft, ob Handmoment 24 und Motormoment 26 in dieselbe Richtung wirken. Andernfalls könnte das erkannte spezifische Drehzahlmuster nicht auf eine Betätigung des Fahrers, sondern auf andere Einflüsse, bspw. auf Fahrbahnunebenheiten, zurückzuführen sein.

In jedem Fall bietet es sich an, Gegenmaßnahmen erst dann einzuleiten, wenn das spezifische Drehzahlmuster mehrere Male hintereinander in einem gewissen Zeitraum erkannt wurde. Hierfür kann bspw. ein Zähler eingesetzt werden, der nach einem gewissen Zeitraum, bspw. durch einen Timer bzw. Zeitgeber vorgegeben, wieder zurückgesetzt wird.

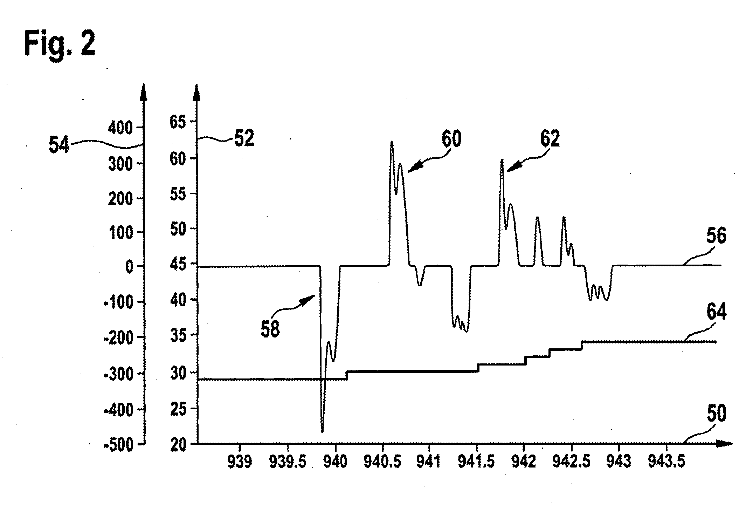

In Figur 2 ist ein Drehzahlverlauf mit Sprüngen über der Zeit dargestellt. An einer Abszisse 50 ist die Zeit in ms, an einer ersten Ordinate 52 der Wert eines Zählers und an einer zweiten Ordinate 54 die Drehzahl in Umdrehungen pro Minute dargestellt.

Die Darstellung zeigt eine Kurve 56, die einen Drehzahlverlauf wiedergibt, welche wiederum aus einer Anzahl von Drehzahlmustern 58, 60 und 62 zusammengesetzt ist. In diesem Fall werden bestimmte, charakteristische Sprünge in der Kurve 56 als Drehzahlmuster 58, 60 und 62 erkannt, die typisch für einen Stick-Slip-Effekt sind. Sobald ein solches charakteristisches Drehzahlmuster 58, 60 und 62 erkannt wurde, wird ein Zähler inkrementiert, wie eine weitere Kurve 64 verdeutlicht. Damit wird die Zahl der bestimmten Drehzahlmuster bzw. die Anzahl der charakteristischen Sprünge in der Kurve 56 und somit im Verlauf der Drehzahl erfasst. Erreicht der Zähler einen bestimmten, vorgebbaren Stand, wird ein Einfrieren erkannt und es werden geeignete Maßnahmen eingeleitet. Nach Ablauf einer gewissen Zeitspanne wird der Zähler jedoch zurückgesetzt, um einen robusten Betrieb zu gewährleisten.

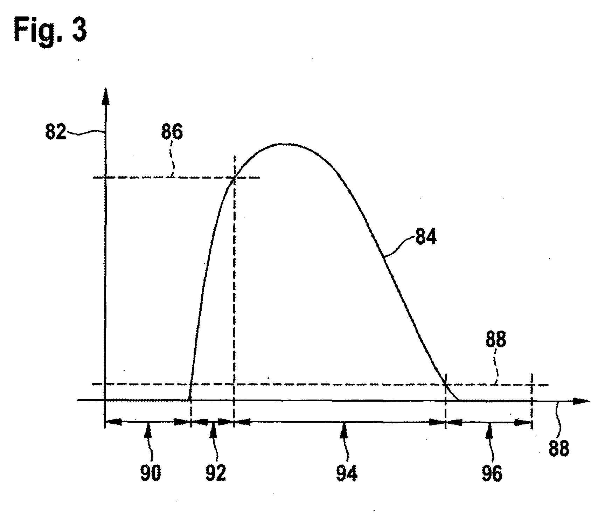

In Figur 3 ist ein Sprung in einem Drehzahlverlauf gezeigt. An einer Abszisse 80 ist die Zeit in ms aufgetragen. An einer Ordinate 82 ist der Verlauf der Drehzahl in Umdrehungen pro Minute angezeigt.

Eine Kurve 84 zeigt einen Sprung in dem Verlauf der Drehzahl. Eine Schwelle 86 zeigt eine obere Drehzahlschwelle und eine weitere Schwelle 88 eine untere Drehzahlschwelle an. Ein erster Zeitbereich 90 gibt die Mindestzeit für die untere Drehzahl, ein weiterer Zeitbereich 92 eine Maximalzeit bis Erreichen der oberen Drehzahl, noch ein Zeitbereich 94 eine Maximalzeit bis Wiedererreichen der unteren Drehzahl und noch ein weiterer Zeitbereich 96 eine Mindestzeit für die untere Drehzahl an. Hiermit wird die Kurve 84 analysiert und die Sprünge in dieser analysiert. Auf diese Weise werden charakteristische Drehzahlmuster bestimmt.

## Patentansprüche

1. Verfahren zum Betreiben einer Hilfskraftlenkung (10) eines Kraftfahrzeugs, bei dem einem vorgegebenen Handmoment (24) in einer Überlagerungseinheit (14) ein von einem Motor (16) aufgebrachtes Motormoment (26) überlagert wird, wobei eine Beeinträchtigung der Hilfskraftlenkung (10) aufgrund einer Erkennung eines Drehzahlmusters des Motors (16) erkannt wird, **dadurch gekennzeichnet, dass** die Erkennung des Drehzahlmusters durch Analyse von charakteristischen Sprüngen in der Kurve (84) eines einen zusammenhängenden Stick-Slip Effekt bildenden Drehzahlverlaufs erfolgt und wobei die Analyse eine Berücksichtigung von Drehzahlschwellwerten (86, 88) und damit verbundene maximale- und/oder minimale Zeitbereiche (90, 92, 94) beinhaltet.

2. Verfahren nach Anspruch 1, bei dem ein Einfrieren der Hilfskraftlenkung (10) erkannt wird.

3. Verfahren nach Anspruch 2, bei dem ein erkannter Reibwert berücksichtigt wird.

4. Verfahren nach Anspruch 2, bei dem weitere Randbedingungen herangezogen werden.

5. Verfahren nach Anspruch 3 oder 4, bei dem die Wirkrichtung des Handmoments (24) und die Wirkrichtung des Motormoments (26) berücksichtigt werden.

6. Verfahren nach einem der Ansprüche 1 bis 5, bei dem bei Erkennen einer Beeinträchtigung Gegenmaßnahmen eingeleitet werden.

7. Computerprogramm mit Programmcodemitteln, um ein Verfahren nach einem der Ansprüche 1 bis 6 durchzuführen, wenn das Computerprogramm auf einem Mikroprozessor eines Computers, insbesondere in einem Steuergerät (22) einer Hilfskraftlenkung (10), ausgeführt wird.

8. Computerprogrammprodukt mit Programmcodemitteln, die auf einem computerlesbaren Datenträger gespeichert sind, um ein Verfahren nach einem der Ansprüche 1 bis 6 durchzuführen, wenn das Computerprogramm auf einem Mikroprozessors eines Computers, insbesondere in einem Steuergerät (22) einer Hilfskraftlenkung (10), ausgeführt wird.

## Claims

1. Method for operating a power-assisted steering system (10) on a motor vehicle, in which a motor torque (26) supplied by a motor (16) is superimposed in a superimposition unit (14) on an input manual torque (24), an impairment of the power-assisted steering system (10) being detected on the basis of a detection of a rotational speed pattern of the motor (16), **characterized in that** the detection of the rotational speed pattern is performed by analysis of characteristic steps in the curve (84) of a rotational speed profile which forms a continuous stick-slip effect, and wherein the analysis comprises the taking into consideration of rotational speed threshold values (86, 88) and associated maximum and/or minimum time ranges (90, 92, 94).

2. Method according to Claim 1, in which freezing of the power-assisted steering system (10) is detected.

3. Method according to Claim 2, in which a detected friction coefficient is taken into account.

4. Method according to Claim 2, in which further boundary conditions are included.

5. Method according to Claim 3 or 4, in which the direction of action of the manual torque (24) and the direction of action of the motor torque (26) are taken into account.

6. Method according to one of Claims 1 to 5, in which countermeasures are initiated if an impairment is detected.

7. Computer program comprising program code means for carrying out a method according to one of Claims 1 to 6 when the computer program is carried out on a microprocessor of a computer, in particular in a control unit (22) of a power-assisted steering system (10).

8. Computer program product comprising program code means, which are stored on a computer-readable data storage medium, for carrying out a method according to one of Claims 1 to 6 when the computer program is carried out on a microprocessor of a computer, in particular in a control unit (22) of a power-assisted steering system (10).

## Revendications

1. Procédé de conduite d'une direction assistée (10) pour véhicule automobile, dans lequel un couple moteur (26) appliqué par un moteur (16) est superposé à un couple manuel prédéterminé (24) dans une unité de superposition (14),
une action sur la direction assistée (10) ayant lieu sur la base de la détection d'un motif de vitesse de rotation du moteur (16),
**caractérisé en ce que**
la reconnaissance du motif de vitesse de rotation s'effectue par analyse de sauts caractéristiques de la courbe (84) d'une évolution de la vitesse de rotation qui forme un effet associé de blocage et de glissement et
**en ce que** l'analyse tient compte de valeurs de seuil (86, 88) de la vitesse de rotation et de plages temporelles (90, 92, 94) maximales et/ou minimales qui y sont associées.

2. Procédé selon la revendication 1, dans lequel la prise par le gel de la direction assistée (10) est détectée.

3. Procédé selon la revendication 2, qui tient compte d'une valeur de frottement détectée.

4. Procédé selon la revendication 2, dans lequel d'autres conditions interviennent.

5. Procédé selon les revendications 3 ou 4, dans lequel la direction d'action du couple manuel (24) et la direction d'action du couple du moteur (26) sont prises en compte.

6. Procédé selon l'une des revendications 1 à 5, dans lequel des contre-mesures sont lancées lors de la détection d'une détérioration.

7. Programme informatique doté de moyens de code de programme qui permettent de mettre en oeuvre le procédé selon l'une des revendications 1 à 6 lorsque le programme informatique est exécuté sur un microprocesseur d'un ordinateur, en particulier dans un appareil de commande (22) d'une direction assistée (10).

8. Produit de programme informatique doté de moyens de code de programme sur un support de données lisibles par ordinateur en vue de mettre en oeuvre un procédé selon l'une des revendications 1 à 6 lorsque le programme informatique est exécuté sur un microprocesseur d'un ordinateur et en particulier dans un appareil de commande (22) d'une direction assistée (10).
